# EUROPÄISCHE PATENTSCHRIFT

(11) **EP 4 551 389 B1**
(45) Veröffentlichungstag und Bekanntmachung des Hinweises auf die Patenterteilung: **02.09.2026**
(21) Anmeldenummer: 23744369.2
(22) Anmeldetag: 07.07.2023
(51) Int. Cl.: B29C 65/02, B65B 9/20, B29C 65/08, B29C 65/18, B65B 9/12

(54) **VERPACKUNGSMASCHINENVORRICHTUNG UND VERFAHREN MIT EINER DERARTIGEN VERPACKUNGSMASCHINENVORRICHTUNG**
PACKAGING-MACHINE DEVICE, AND METHOD HAVING SUCH A PACKAGING-MACHINE DEVICE
DISPOSITIF DE MACHINE D'EMBALLAGE, ET PROCÉDÉ COMPRENANT UN TEL DISPOSITIF DE MACHINE D'EMBALLAGE

(30) Priorität: 07.07.2022 DE 102022117004
(43) Veröffentlichungstag der Anmeldung: 14.05.2025
(73) Patentinhaber: Syntegon Packaging Systems AG, 8222 Beringen (CH)
(72) Erfinder: KRIEGER, Raphael, 8253 Diessenhofen (CH); LOPES, Michael, 78333 Stockach (DE); MAJ, Maurizio, 8400 Winterthur (CH)
(74) Vertreter: Novagraaf Group
(86) Internationale Anmeldenummer: PCT/EP2023/068828
(87) Internationale Veröffentlichungsnummer: WO 2024/008916

(56) Entgegenhaltungen:
- EP-A2- 0 130 148
- JP-A- 2006 219 142
- US-B1- 6 230 781

## Beschreibung

### Stand der Technik

Die Erfindung betrifft insbesondere eine Verpackungsmaschinenvorrichtung mit wenigstens einer Verschlussvorrichtung, insbesondere einer Siegelvorrichtung, zur Herstellung wenigstens einer Verschlussnaht, insbesondere einer Siegelnaht, an zumindest einem Verpackungsmaterial.

Derartige Verpackungsmaschinenvorrichtungen sind bereits bekannt. Bei Verpackungsmaschinen mit entsprechenden Verpackungsmaschinenvorrichtungen wird das Verpackungsmaterial zu einem Schlauchbeutel geformt. Bei einem Packvorgang von Produkten und bei einem Verschließen des Schlauchbeutels in einzelne Verpackungen werden Spannungen in den Schlauchbeutel initiiert, was zu Fehl-/Eckfalten führen kann.

Aus DE 37 32 033 A1, AU 1985 / 43753 B2, JP 2003-11 923 A, DE 38 37 709 A1 und US 6 138 442 Asind beispielsweise bereits Verpackungsmaschinen mit einer Verpackungsmaschinenvorrichtung bekannt, wobei die Verpackungsmaschinenvorrichtung wenigstens eine Verschlussvorrichtung, insbesondere eine Siegelvorrichtung, zur Herstellung wenigstens einer Verschlussnaht, insbesondere einer Siegelnaht, an zumindest einem Verpackungsmaterial und eine Formvorrichtung umfasst, die dazu vorgesehen ist, das zu einem Schlauchbeutel vorgeformte Verpackungsmaterial in einem Bereich der Verschlussnaht, insbesondere zumindest teilweise vor einem Herstellen der Verschlussnaht, zu formen, insbesondere zusammenzudrücken, um Füllgut aus dem Bereich der einzubringenden Verschlussnaht weg zu streichen.

Des Weiteren sind beispielsweise aus JP 2006-219142 A, US 6 230 781 B1 und EP 0 130 148 A2 bereits Verpackungsmaschinen mit einer Verpackungsmaschinenvorrichtung bekannt, wobei die Verpackungsmaschinenvorrichtung wenigstens eine Verschlussvorrichtung, insbesondere eine Siegelvorrichtung, zur Herstellung wenigstens einer Verschlussnaht, insbesondere einer Siegelnaht, an zumindest einem Verpackungsmaterial und eine Formvorrichtung umfasst, die dazu vorgesehen ist, das zu einem Schlauchbeutel vorgeformte Verpackungsmaterial in einem Bereich der Verschlussnaht, insbesondere zumindest teilweise vor einem Herstellen der Verschlussnaht, zu formen, wobei die Formvorrichtung entlang einer parallel zu einer Transportrichtung des Verpackungsmaterials verlaufenden Richtung ausgehend von einer Seite der Verschlussnaht zu einer anderen Seite der Verschlussnaht auf die Verschlussnaht einwirkt.

Die Aufgabe der Erfindung besteht insbesondere darin, eine gattungsgemäße Verpackungsmaschinenvorrichtung mit verbesserten Eigenschaften hinsichtlich Prozesssicherheit und insbesondere Dichtigkeit von hergestellten Verpackungen bereitzustellen. Die Aufgabe wird erfindungsgemäß durch die Merkmale des Anspruchs 1 gelöst, während vorteilhafte Ausgestaltungen und Weiterbildungen der Erfindung den Nebenansprüchen und Unteransprüchen entnommen werden können.

### Offenbarung der Erfindung

Die Erfindung geht aus von einer Verpackungsmaschinenvorrichtung mit wenigstens einer Verschlussvorrichtung, insbesondere einer Siegelvorrichtung, zur Herstellung wenigstens einer Verschlussnaht, insbesondere einer Siegelnaht, an zumindest einem Verpackungsmaterial und mit einer Formvorrichtung, die dazu vorgesehen ist, das zu einem Schlauchbeutel vorgeformte Verpackungsmaterial in einem Bereich der Verschlussnaht, insbesondere zumindest teilweise vor einem Herstellen der Verschlussnaht, zu formen.

Es wird vorgeschlagen, dass die Formvorrichtung dazu vorgesehen ist, das Verpackungsmaterial im Bereich der Verschlussnaht ausgehend von einem inneren Bereich der Verschlussnaht in Richtung zwei äußerer Bereiche der Verschlussnaht zu formen.

Unter einer "Verschlussvorrichtung" sind in diesem Zusammenhang verschiedene, dem Fachmann als geeignet erscheinende Vorrichtungen denkbar, mittels denen ein Schlauchbeutel sinnvoll verschlossen werden kann, wie Falt- und/oder Klebevorrichtungen, jedoch besonders vorteilhaft Siegelvorrichtungen.

Unter "Siegeln" sollen sämtliche dem Fachmann als sinnvoll erscheinende Siegelverfahren verstanden werden, wie insbesondere Kaltsiegeln, Heißsiegeln, Ultraschallsiegeln, Trennsiegeln usw.

Es ist auch denkbar, dass nicht nur ein Verpackungsmaterial vorgesehen ist, sondern mehrere Verpackungsmaterialien vorgesehen sind, wie beispielsweise ein Trägermaterial und ein Barrierematerial, die zusammengeführt werden.

Unter einer "Verschlussnaht" sind verschiedene, dem Fachmann als geeignet erscheinende Nähte denkbar, wie beispielsweise eine Längsnaht, die in Längsrichtung des Schlauchbeutels verläuft, jedoch besonders vorteilhaft eine Quernaht, die quer zur Längsrichtung des Schlauchbeutels und insbesondere auch parallel zu einer Abtrennlinie, an der der Schlauchbeutel zu einer Separierung einzelner Verpackungen abgetrennt und/oder perforiert wird, verläuft.

Unter einer "Formvorrichtung" sollen in diesem Zusammenhang Vorrichtungen verstanden werden, die zum Falten, insbesondere Vorfalten, und/oder besonders bevorzugt zum Glätten des Verpackungsmaterials vorgesehen sind, und zwar nachdem dieses mit Formmitteln wie Formschultern und/oder einem oder mehreren Faltkästen, mittels denen das Verpackungsmaterial insbesondere durch Punkt- und/oder Linienbelastungen zu einem Schlauchbeutel geformt ist. Ferner soll unter einer "Formvorrichtung" eine Vorrichtung verstanden werden, die Formflächen aufweist, die getrennt von Verschlussflächen der Verschlussvorrichtung ausgebildet sind, die zur Herstellung der Verschlussnaht vorgesehen sind, wie insbesondere Siegelflächen einer Siegelbacke. Die Formvorrichtung weist insbesondere eine Formeinheit auf, die getrennt von einer Formeinheit ausgebildet ist, mittels der das Verpackungsmaterial zu dem Schlauchbeutel geformt wird. Vorzugsweise weist die Formvorrichtung eine Formeinheit auf, die räumlich getrennt von einer Formeinheit angeordnet ist, die zum Formen des Schlauchbeutels vorgesehen ist. Die Formvorrichtung weist vorzugsweise eine Formeinheit auf, die dazu vorgesehen ist, den Schlauchbeutel zu berühren, bevor Verschlussmittel der Verschlussvorrichtung, wie insbesondere Siegelbacken, den Schlauchbeutel berühren. Insbesondere ist der Formvorgang zumindest zum Großteil abgeschlossen, wenn Schlauchbeutelwände des Schlauchbeutels mittels Verschlussmittel, wie insbesondere mittels Siegelbacken kontaktiert und mit Druck und/oder Temperatur beaufschlagt werden.

Die Formvorrichtung weist vorzugsweise eine Formeinheit auf, die in Bewegungsrichtung des Schlauchbeutels und in einem Kontaktzeitpunkt derselben betrachtet nach Verschlussmitteln, wie insbesondere Siegelbacken, der Verschlussvorrichtung angeordnet ist, wobei die Formvorrichtung auch eine Formeinheit aufweisen kann, die in Bewegungsrichtung des Schlauchbeutels und in einem Kontaktzeitpunkt derselben betrachtet vor Verschlussmitteln, wie insbesondere Siegelbacken, der Verschlussvorrichtung angeordnet ist.

Unter "im Bereich der Verschlussnaht" soll in diesem Zusammenhang verstanden werden, dass zumindest ein Bereich des Verpackungsmaterials durch die Formvorrichtung geformt wird, der einen Abstand zur Verschlussnaht aufweist, der kleiner ist als eine halbe Länge einer herzustellenden Verpackung, vorzugsweise kleiner ist als eine viertel Länge der herzustellenden Verpackung, und/oder kleiner ist als 8 cm, vorzugsweise kleiner ist als 4 cm, wobei unter einer "Länge der Verpackung" eine Abmessung der herzustellenden Verpackung in Längsrichtung des Verpackungsschlauchs verstanden werden soll.

Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Mittels der erfindungsgemäßen Ausgestaltung können durch Spannungen im Schlauchbeutel initiierte Fehl-/Eckfalten im Bereich der Verschlussnaht zumindest reduziert werden. Es können mit einer besonders hohen Prozesssicherheit besonders dichte Verpackungen sowie optisch schöne Verschlussnähte hergestellt werden, und zwar besonders vorteilhaft, wenn die Formvorrichtung dazu vorgesehen ist, das zu einem Schlauchbeutel vorgeformte Verpackungsmaterial in dem Bereich der Verschlussnaht zumindest teilweise vor einem Herstellen der Verschlussnaht zu formen. Alternativ oder vorzugsweise zusätzlich kann die Formvorrichtung auch dazu vorgesehen sein, das zu einem Schlauchbeutel vorgeformte Verpackungsmaterial in dem Bereich der Verschlussnaht zumindest teilweise nach einem Herstellen der Verschlussnaht zu formen.

Vorteilhaft ist die Verschlussnaht, wie bereits ausgeführt, von einer Quernaht gebildet und der Formvorgang mittels der Formvorrichtung findet zeitlich nach einem Herstellen einer Längsnaht des Schlauchbeutels statt.

Besonders vorteilhaft können auch mit einer besonders hohen Prozesssicherheit Verpackungen mit Verpackungsmaterialien hergestellt werden, die im Vergleich zu Standardverpackungsmaterialien grundsätzlich höhere Anforderungen bzgl. einer Verarbeitbarkeit stellen. Besonders vorteilhaft können dabei Verpackungsmaterialien verarbeitet werden, die eine Dicke größer als 30 µm, vorzugsweise größer als 40 µm und ganz besonders bevorzugt größer als 60 µm aufweisen, Verpackungsmaterialien, die zumindest zu 20%, vorzugsweise zumindest zu 40% und besonders bevorzugt zumindest zu 60% aus recyceltem Material hergestellt wurden, Verpackungsmaterialien, die zumindest zu 20%, vorzugsweise zumindest zu 40% und besonders bevorzugt zumindest zu 60% aus nachwachsendem Rohstoff hergestellt wurden, sowie Verpackungsmaterialien, die zumindest zu 10% und vorzugsweise zumindest zu 20% aus Aluminium und/oder einem Aluminiumverbundmaterial hergestellt wurden.

Unter "nachwachsenden Rohstoffen" sollen hierbei organische Rohstoffe, insbesondere pflanzliche Rohstoffe, welche aus land- und/oder forstwirtschaftlicher Produktion stammen und insbesondere vom Menschen zielgerichtet für weiterführende Anwendungszwecke außerhalb der Nahrungs- und Futtermittelindustrie angebaut werden oder bei welchen es sich um Nebenprodukte und/oder Abfallprodukte aus der Landwirtschaft und/oder der Nahrungs- und Futtermittelindustrie handelt, verstanden werden. Nachwachsende Rohstoffe im Sinne der vorliegenden Anmeldung sind ausschließlich organische Rohstoffe, welche nicht fossilen Ursprungs sind. Vorzugsweise handelt es sich bei nachwachsenden Rohstoffen vorliegend um heimische Produkte aus land- und/oder forstwirtschaftlicher Produktion sowie deren Nebenprodukte und/oder Reststoffe, sofern diese nicht dem Abfallrecht unterliegen, sowie um Algen.

Besonders vorteilhaft können auch Verpackungsmaterialien verarbeitet werden, die zumindest teilweise aus einem Faserwerkstoff und/oder aus einem Papierwerkstoff hergestellt wurden.

Die Formung mittels der Formvorrichtung, insbesondere die Glättung des Verpackungsmaterials, kann auf verschiedene, dem Fachmann als sinnvoll erscheinende Arten erfolgen, wie beispielsweise durch einfaches Plattdrücken. Besonders vorteilhaft ist die Formvorrichtung jedoch dazu vorgesehen, das Verpackungsmaterial in einer Projektionsebene betrachtet, die parallel zur Verschlussnaht und parallel zur Längsrichtung des Schlauchbeutels und/oder einer Bewegungsrichtung des Schlauchbeutels verläuft, gezielt nacheinander in unterschiedlichen Bereichen zu kontaktieren und hierdurch zu formen, insbesondere zu glätten. Hierdurch können besonders vorteilhafte Formungen, insbesondere Glättungen erreicht werden und es kann auch gezielt Luft aus dem Schlauchbeutel entfernt werden. Besonders vorteilhaft kann die Formvorrichtung auch dazu vorgesehen sein, eine Relativbewegung zwischen einer mit dem Verpackungsmaterial in Kontakt befindlichen Formfläche einer Formeinheit der Formvorrichtung und dem Verpackungsmaterial, insbesondere in der Projektionsebene, die parallel zur Verschlussnaht und parallel zur Längsrichtung des Schlauchbeutels und/oder einer Bewegungsrichtung des Schlauchbeutels verläuft, betrachtet, zu erzeugen, d.h. eine Art Streichbewegung. Eine entsprechende Streichbewegung kann durch ein Bewegen der Formfläche relativ zum Verpackungsmaterial und/oder kann durch eine Bewegung des Verpackungsmaterials relativ zur Formfläche erreicht werden.

Erfindungsgemäß ist die Formvorrichtung dazu vorgesehen, das Verpackungsmaterial im Bereich der Verschlussnaht ausgehend von einem inneren Bereich der Verschlussnaht in Richtung zwei äußerer Bereiche der Verschlussnaht zu formen, wodurch insbesondere unerwünschte Eckfalten besonders vorteilhaft zumindest reduziert bzw. entfernt werden können. Eine entsprechende Kontaktierung kann auf verschiedene, dem Fachmann als sinnvoll erscheinende Arten erreicht werden, wie durch gezielte Bewegungen einer oder mehrerer Formflächen zumindest einer Formeinheit der Formvorrichtung relativ zum Verpackungsmaterial, indem beispielsweise die Formeinheit auf einer speziellen Kurvenbahn geführt wird, angetrieben durch einen oder auch mehrere Aktuatoren, und/oder indem die Formvorrichtung eine Formeinheit aufweist, die in einem Kontaktzeitpunkt mit dem Verpackungsmaterial betrachtet eine sich in einem Verlauf in Richtung der Verschlussnaht räumlich verändernde Geometrie aufweist, wodurch konstruktiv einfach erreicht werden kann, dass die Formeinheit das Verpackungsmaterial im Bereich der Verschlussnaht ausgehend von einem inneren Bereich der Verschlussnaht in Richtung zu zumindest einem äußeren Bereich der Verschlussnaht formt. Unter einer "veränderten Geometrie eines Bauteils" soll in diesem Zusammenhang verstanden werden, dass in einem Zeitpunkt betrachtet und im Verlauf einer bestimmten Richtung betrachtet sich zumindest eine Abmessung des Bauteils verändert.

Vorzugsweise weist eine Formeinheit der Formvorrichtung eine Form auf, so dass in einer Projektionsebene senkrecht zu einer Bewegungsrichtung der Formeinheit im Betrieb betrachtet, sich ausgehend von einem mittleren Bereich der Verschlussnaht entlang der Verschlussnaht in Richtung eines, vorzugsweise in Richtung beider Endbereiche der Verschlussnaht betrachtet, sich ein Abstand zwischen der Formeinheit und der Verschlussnaht bzw. einer Verschlusskontaktstelle der Verschlusseinheit vergrößert, was vorzugsweise durch eine Schrägfläche und/oder auch durch eine Krümmung erreicht werden kann. Dabei verändert sich der Abstand um zumindest 0,2 mm, vorzugsweise um zumindest 0,5 mm und ganz besonders bevorzugt um zumindest 1 mm. Alternativ und/oder zusätzlich könnte die Formeinheit mit unterschiedlichen Dicken, wie vorzugsweise kuppelartig ausgebildet sein. Vorzugsweise ist die Formeinheit dazu vorgesehen, eine auseinanderlaufende Drucklinien-Anordnung zu erzeugen.

Ferner wird vorgeschlagen, dass die Formvorrichtung dazu vorgesehen ist, das Verpackungsmaterial im Bereich der Verschlussnaht quer zur Verschlussnaht zu formen, und zwar besonders bevorzugt, indem die Formvorrichtung eine Formeinheit aufweist, die in einem Kontaktzeitpunkt mit dem Verpackungsmaterial betrachtet eine sich in einem Verlauf quer zur Verschlussnaht räumlich verändernde Geometrie aufweist. Besonders bevorzugt ist die Formvorrichtung dazu vorgesehen, das Verpackungsmaterial im Bereich der Verschlussnaht quer zur Verschlussnaht, in Richtung der Verschlussnaht vorzuformen, wodurch neben einem vorteilhaften Formen, insbesondere Glätten, vorteilhaft Luft aus dem Schlauchbeutel geführt werden kann. Bei einer Formvorrichtung, die eine Formeinheit aufweist, die in Bewegungsrichtung des Schlauchbeutels und in einem Kontaktzeitpunkt derselben betrachtet vor Verschlussmitteln, wie insbesondere Siegelbacken, der Verschlussvorrichtung angeordnet ist, ist die Formvorrichtung vorzugsweise dazu vorgesehen, das Verpackungsmaterial quer zur Verschlussnaht von dieser weg zu formen.

In einer weiteren Ausgestaltung der Erfindung wird vorgeschlagen, dass die Formvorrichtung eine Lagereinheit aufweist, mittels derer eine Formeinheit der Formvorrichtung schwenkbar gelagert ist, wodurch konstruktiv einfach vorteilhafte Formbewegungen erreicht werden können. Die Formeinheit kann jedoch auch alternativ oder zusätzlich zu einer schwenkbaren Lagerung translatorisch bewegbar gelagert sein.

Weist die Formvorrichtung eine Lagereinheit auf, die zumindest teilweise einstückig mit einer Lagereinheit der Verschlussvorrichtung ausgebildet ist, können zusätzliche Bauteile und Kosten eingespart werden. Eine Formeinheit der Formvorrichtung ist dabei vorzugsweise gemeinsam mit einer Verschlusseinheit, wie insbesondere mit einer Siegelbacke, bewegbar gelagert.

Ferner wird vorgeschlagen, dass die Formvorrichtung eine Formeinheit aufweist, die verformbar, insbesondere elastisch verformbar ausgebildet ist, wobei in diesem Zusammenhang unter "verformbar" verstanden werden soll, dass die Formeinheit derart ausgebildet ist, dass sie beim Verformen des Verpackungsmaterials eine Abmessungsänderung von zumindest 0,5 mm erfährt. Die Formeinheit wird hierbei vorzugsweise elastisch verformt, vorzugsweise komprimiert. Vorteilhaft ist die Formeinheit zumindest teilweise aus einem Elastomer und/oder einem Schaummaterial gebildet. Ferner weist die Formeinheit einen Grundkörper aus einem ersten Material, wie vorzugsweise aus Stahl, und einen daran angeordneten, insbesondere aufgebrachten Schichtkörper aus einem zweiten Material, wie vorzugsweise aus einem Material, das gegenüber einem Material des Grundkörpers eine geringere Härte aufweist, auf.

Zudem wird ein Herstellverfahren zur Herstellung einer Formeinheit einer Formvorrichtung einer erfindungsgemäßen Verpackungsmaschinenvorrichtung vorgeschlagen, das sich durch zumindest einen additiven Prozessschritt, vorzugsweise einen 3D-Druckprozessschritt, auszeichnet, wodurch die Formeinheit besonders flexibel und kostengünstig ausgestaltet und damit eine besonders vorteilhafte Formung des Verpackungsmaterials erreicht werden kann. Alternativ oder zusätzlich zu einem 3D-Druckverfahren sind auch weitere, dem Fachmann als sinnvoll erscheinende additive Prozessschritte denkbar, wie insbesondere Anspritzverfahrensschritte, bei denen ein Material ein- oder mehrschichtig auf ein bereits bestehendes Objekt aufgebracht wird.

Die erfindungsgemäßen Vorrichtungen, Maschinen, Einheiten und Verfahren sollen hierbei nicht auf die oben beschriebenen Anwendungen und Ausführungsformen beschränkt sein. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Einen Ausschnitt einer schematisch dargestellten Verpackungsmaschine mit einer erfindungsgemäßen Verpackungsmaschinenvorrichtung,
- Fig. 2: einen vergrößerten Ausschnitt II aus Fig. 1 zu einem ersten Zeitpunkt,
- Fig. 3: den vergrößerten Ausschnitt II zu einem zweiten Zeitpunkt,
- Fig. 4: eine Ansicht einer Formeinheit einer Formvorrichtung in einer Projektionsebene senkrecht zu einer Bewegungsrichtung der Formeinheit im Betrieb,
- Fig. 5: eine Schnittdarstellung entlang der Linie V-V in Fig. 4,
- Fig. 6: eine Verpackung hergestellt mit der in Fig. 1 dargestellten Verpackungsmaschine und
- Fig. 7: eine Formeinheit der erfindungsgemäßen Formvorrichtung bei einer Herstellung derselben bei einem additiven Prozess.

### Beschreibung des Ausführungsbeispiels

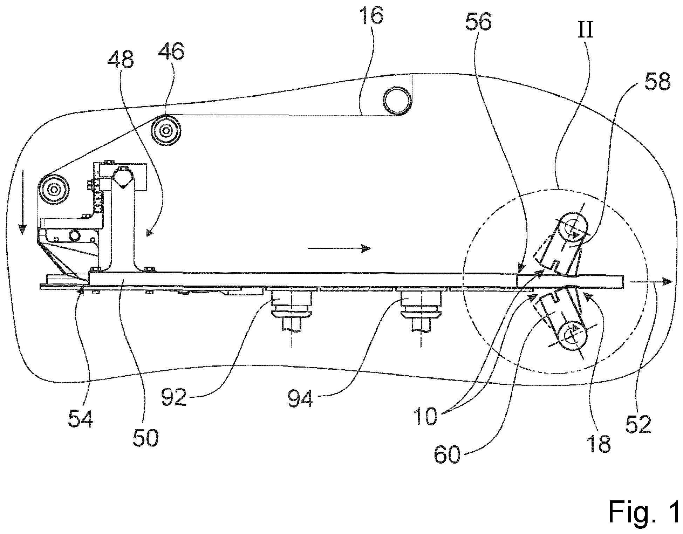

Figur 1 zeigt einen Ausschnitt einer schematisch dargestellten Verpackungsmaschine mit einer erfindungsgemäßen Verpackungsmaschinenvorrichtung. Die Verpackungsmaschine ist bevorzugt als Horizontalmaschine ausgebildet, wie dargestellt, könnte jedoch auch als Vertikalmaschine ausgebildet sein.

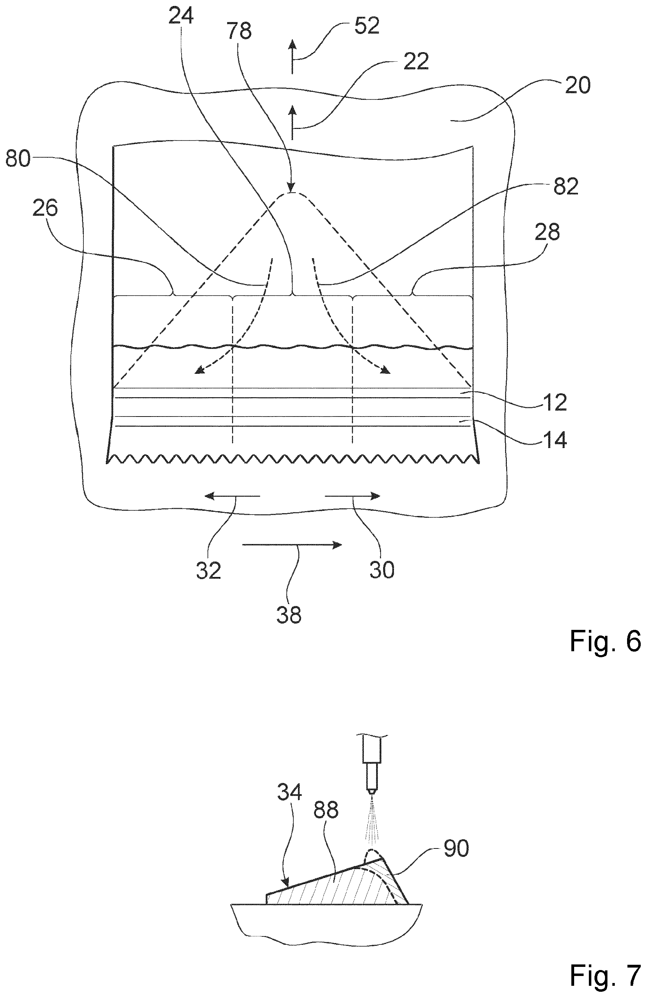

Die Verpackungsmaschinenvorrichtung weist eine Verschlussvorrichtung 10 auf, und zwar einer Siegelvorrichtung, zur Herstellung von zwei als Siegelnähte ausgebildeten Verschlussnähten 12, 14 an einem Verpackungsmaterial 16. Die Verschlussnähte 12, 14 sind Quernähte. Figur 6 zeigt eine mittels der Verpackungsmaschine hergestellte Verpackung mit den als Quernähte ausgebildeten Verschlussnähten 12, 14.

Die Verpackungsmaschinenvorrichtung umfasst eine Formvorrichtung 18, die dazu vorgesehen ist, das zu einem Schlauchbeutel vorgeformte Verpackungsmaterial 16 in einem Bereich der Verschlussnähte 12, 14 vor einem Herstellen der Verschlussnähte 12, 14 vorzuformen, und zwar zu glätten und teilweise zu evakuieren (vgl. Fig. 1 bis 5).

Das Verpackungsmaterial 16 wird von einer nicht näher dargestellten Rolle abgerollt und über Umlenkrollen 46 einer Formeinheit 48 zugeführt, in der das bis zu diesem Zeitpunkt ebenflächige Verpackungsmaterial 16 zu dem Schlauchbeutel geformt wird (vgl. Fig. 1). Der Schlauchbeutel wird einem Führungstunnel 50 zugeführt. An einem entgegen einer Bewegungsrichtung 52 des Schlauchbeutels weisenden Ende 54 des Führungstunnels 50 wird mittels einer nicht näher dargestellten Fördervorrichtung Packgut in den Schlauchbeutel gefördert. An einem in Bewegungsrichtung 52 des Schlauchbeutels weisenden Ende 56 wird der Schlauchbeutel der Verpackungsmaschinenvorrichtung mit der Formvorrichtung 18 und der Verschlussvorrichtung 10 zugeführt.

Zwischen den Enden 54, 56 des Führungstunnels 50 wird mittels Siegelrollen 92, 94 eine Längssiegelnaht am Schlauchbeutel hergestellt.

Die Formvorrichtung 18 weist zwei Formeinheiten 34, 36 auf, die Vorformflächen ausbilden, die bei einem Vorformvorgang mit dem Verpackungsmaterial in Kontakt kommen, bevor Siegelbacken 58, 60 der Verschlussvorrichtung 10 mit dem Verpackungsmaterial 16 in Kontakt kommen und insbesondere bevor mittels der Siegelbacken 58, 60 Wandungen des Schlauchbeutels zusammengeführt und anschließend mit Druck beaufschlagt werden.

Die Formvorrichtung 18 ist dazu vorgesehen, das Verpackungsmaterial 16 in einer Projektionsebene 20 betrachtet (vgl. Fig. 1 und 6), die parallel zur Verschlussnaht 12, 14 und parallel zu einer Längsrichtung 22 des Schlauchbeutels und der Bewegungsrichtung 52 des Schlauchbeutels verläuft, gezielt nacheinander in unterschiedlichen Bereichen 24, 26, 28 zu kontaktieren und hierdurch zu formen, insbesondere zu glätten. Mittels der Formvorrichtung 18 wird erreicht, dass sich das Verpackungsmaterial 16 bzw. der Verpackungsschlauch zumindest in erster Linie an den Formeinheiten 34, 36 orientiert und nicht an dem Packgut, das eine unebene Kontur haben kann.

Die Formvorrichtung 18 ist dazu vorgesehen, unabhängig von einer Kontur des Packguts, das Verpackungsmaterial 16 im Bereich der Verschlussnähte 12, 14 ausgehend von einem inneren Bereich 24 der Verschlussnähte 12, 14 in entgegengesetzten Richtungen 30, 32 zu äußeren Bereichen 26, 28 der Verschlussnähte 12, 14 hin vorzuformen.

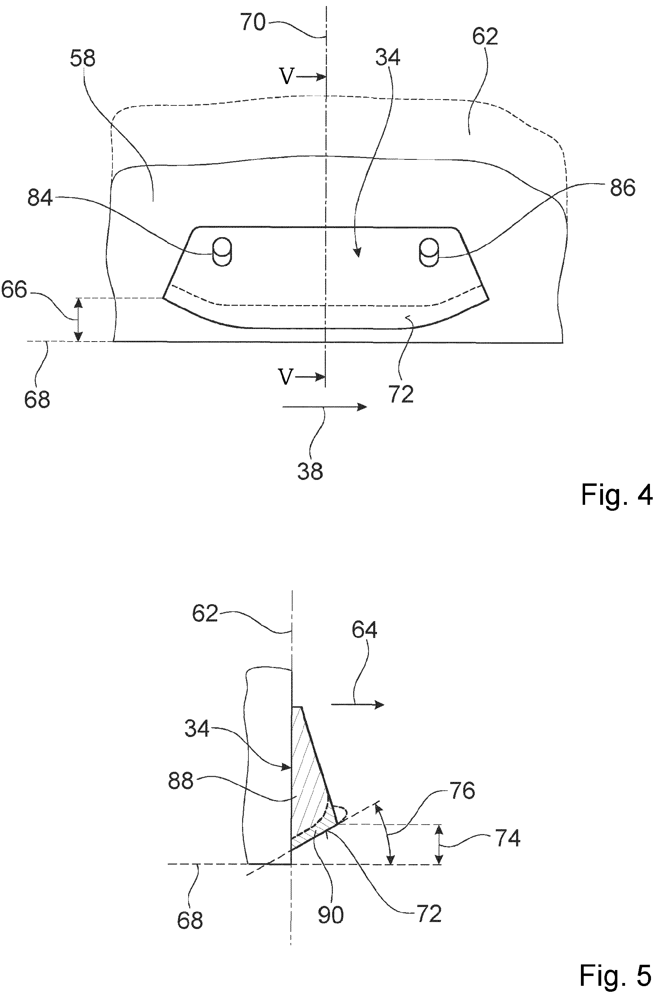

Hierfür weisen die Formeinheiten 34, 36 der Formvorrichtung 18, in einem Kontaktzeitpunkt mit dem Verpackungsmaterial 16 betrachtet eine sich in einem Verlauf in Richtung 38 der Verschlussnähte 12, 14 räumlich verändernde Geometrie auf, was nachfolgend anhand der Formeinheit 34 beschrieben ist, wobei dies entsprechend für die Formeinheit 36 gilt (vgl. Fig. 4). Die Verpackungsmaschinenvorrichtung weist in einer Projektionsebene 62 senkrecht zu einer Bewegungsrichtung 64 der Formeinheit 34 im Betrieb betrachtet, ausgehend von einem mittleren Bereich der Verschlussnähte 12, 14 entlang der Verschlussnähte 12, 14 in Richtung beider Endbereiche der Verschlussnähte 12, 14 betrachtet, einen sich vergrößernden Abstand 66 zwischen der Formeinheit 34 und einer Kontaktebene 68 der Verschlussvorrichtung 10, die senkrecht zur Projektionsebene 62 verläuft und in der Siegelbackenkontaktflächen liegen, auf. Dabei verändert sich der Abstand 66 um mehr als 1 mm bei dem gezeigten Ausführungsbeispiel. Die Formeinheit 34 weist in einem Verlauf in Richtung 38 betrachtet eine gleichbleibende Dicke auf. Die Formeinheit 34 könnte jedoch auch vorzugsweise insbesondere im mittleren Bereich eine größere Dicke aufweisen als an den Seitenbereichen und somit kuppelartig ausgestaltet sein.

Ferner ist die Formvorrichtung 18 dazu vorgesehen, das Verpackungsmaterial 16 im Bereich der Verschlussnähte 12, 14 quer zu den Verschlussnähten 12, 14 vorzuformen, und zwar vorzugsweise ohne das Packgut zu berühren und damit eventuell zu beschädigen. Die Formeinheiten 34, 36 weisen in einem Kontaktzeitpunkt mit dem Verpackungsmaterial 16 betrachtet eine sich in einem Verlauf quer zu den Verschlussnähten 12, 14 räumlich verändernde Geometrie auf.

In einer Schnittebene 70 senkrecht zur Projektionsebene 62 betrachtet weist die Formeinheit 34 eine dem Verpackungsmaterial 16 zugewandte Außenfläche 72 auf, die einen im Verlauf der Bewegungsrichtung 64 der Formeinheit 34 betrachtet zunehmenden Abstand 74 zu der Kontaktebene 68 der Verschlussvorrichtung 10 aufweist. Dabei verändert sich der Abstand 74 um mehr als 1 mm bei dem gezeigten Ausführungsbeispiel.

Die Außenfläche 72 ist als zur Kontaktebene 68 verlaufende Schrägfläche ausgebildet, könnte jedoch auch gekrümmt ausgebildet sein. Ein Winkel 76 zwischen der Außenfläche 72 und der Kontaktebene 68 beträgt vorzugsweise zwischen 0° und 90°, besonders vorzugsweise zwischen 20° und 70°. Der Winkel 76 ist dabei vorzugsweise abhängig von einem gewünschten Faltdreieck 78 und einer Abzugslänge des Verpackungsmaterials 16 gewählt (vgl. Fig. 6).

In Figur 6 sind Vorformlinien 80, 82 bzw. Drucklinien dargestellt, entlang derer das Verpackungsmaterial 16 mittels der Formeinheiten 34, 36, unabhängig von einer Kontur des Packguts, vorgeformt und entlang derer von der Formeinheit 34 Druck auf das Verpackungsmaterial 16 aufgebracht wird. Die Vorformlinien 80, 82 sind entgegen der Bewegungsrichtung 52 des Schlauchbeutels, hin zu den Verschlussnähten 12, 14 auseinanderlaufend ausgebildet. Ferner sind die Vorformlinien 80, 82 gekrümmt ausgebildet.

Die Formvorrichtung 18 weist Lagereinheiten 40, 42 auf, mittels derer die Formeinheiten 34, 36 der Formvorrichtung 18 schwenkbar gelagert sind (vgl. Fig 1 bis 3). Die Lagereinheiten 40, 42 sind einstückig mit Lagereinheiten der Verschlussvorrichtung 10 ausgebildet, und zwar werden die Lagereinheiten 40, 42 von Quersiegelwellen gebildet. Die Siegelbacken 58, 60 sind an den Quersiegelwellen angeordnet und über diese schwenkbar gelagert. Die Formeinheiten 34, 36 sind jeweils auf einer in Schwenkrichtung weisenden Seite an den Siegelbacken 58, 60 angeordnet, und zwar direkt auf diesen befestigt. Aufgrund dessen, dass die Formeinheiten 34, 36 elastisch verformbar sind, können diese in radialer Richtung ausgehend von Schwenkachsen der Lagereinheiten 40, 42 über die Siegelbacken 58, 60 hinausragen. Alternativ könnten die Formeinheiten 34, 36 auch direkt an den Quersiegelwellen oder an an den Quersiegelwellen befestigten, nicht näher dargestellten Stützringen befestigt sein.

Die Formeinheit 34 ist in ihrer Position an der Siegelbacke 58 einstellbar gelagert (vgl. Fig. 4). Hierfür weist die Formeinheit 34 Langlöcher 84, 86 auf. Entsprechendes gilt für die Formeinheit 36.

Die Formeinheiten 34, 36 sind in einem Siegelzeitpunkt betrachtet auf einer in Bewegungsrichtung 52 des Schlauchbeutels weisenden Seite der Siegelbacken 58, 60 angeordnet (vgl. Fig. 1 bis 3). Zusätzlich könnten auch auf einer der Bewegungsrichtung 52 des Schlauchbeutels entgegengesetzt weisenden Seite Formeinheiten an den Siegelbacken 58, 60 angeordnet sein, wie dies schematisch angedeutet ist, um das Verpackungsmaterial 16 vorzugsweise in Bewegungsrichtung 52 des Schlauchbeutels betrachtet, räumlich vor und/oder nach den Verschlussnähten 12, 14 und zeitlich vor und/oder nach der Herstellung der Verschlussnähte 12, 14 vorteilhaft zu formen und vorzugsweise zumindest teilweise zu evakuieren. Dabei können die Formeinheiten 34, 36 baugleich mit den Formeinheiten auf der gegenüberliegenden Seite der Siegelbacken 58, 60 ausgebildet sein, insbesondere bei translatorisch verschiebbaren Siegelbacken, oder auch unterschiedlich, insbesondere bei schwenkbar gelagerten Siegelbacken 58, 60 gemäß dem gezeigten Ausführungsbeispiel.

Die Formeinheiten 34, 36 sind elastisch verformbar ausgebildet und werden beim Formen des Verpackungsmaterials 16 elastisch verformt. Die Formeinheiten 34, 36 sind in einem Herstellverfahren mit einem additiven Prozessschritt hergestellt, und zwar in einem 3D-Druckprozessschritt, wie dies in Figur 7 anhand der Formeinheit 34 dargestellt ist, wobei Entsprechendes für die Formeinheit 36 gilt. Die Formeinheit 34 weist einen Grundkörper 88 aus Stahl auf, auf den in dem additiven Prozessschritt eine Elastomerschicht 90 aufgedruckt wird. Die Elastomerschicht 90 könnte auch über eine Oberseite des Grundkörpers 88 überragend ausgebildet sein, wie dies gestrichelt in den Figuren 5 und 7 angedeutet ist, insbesondere um eine größere Außenfläche 72 und eine verbesserte Verformbarkeit der Elastomerschicht 90 zu erreichen.

Alternativ könnte auch die gesamte Formeinheit 34 in einem 3D-Druckverfahren oder auch in einem Mehrkomponentenspritzverfahren hergestellt werden. Die Elastomerschicht 90 wird während des Formvorgangs komprimiert, und zwar vorzugsweise mehr als 0,5 mm.

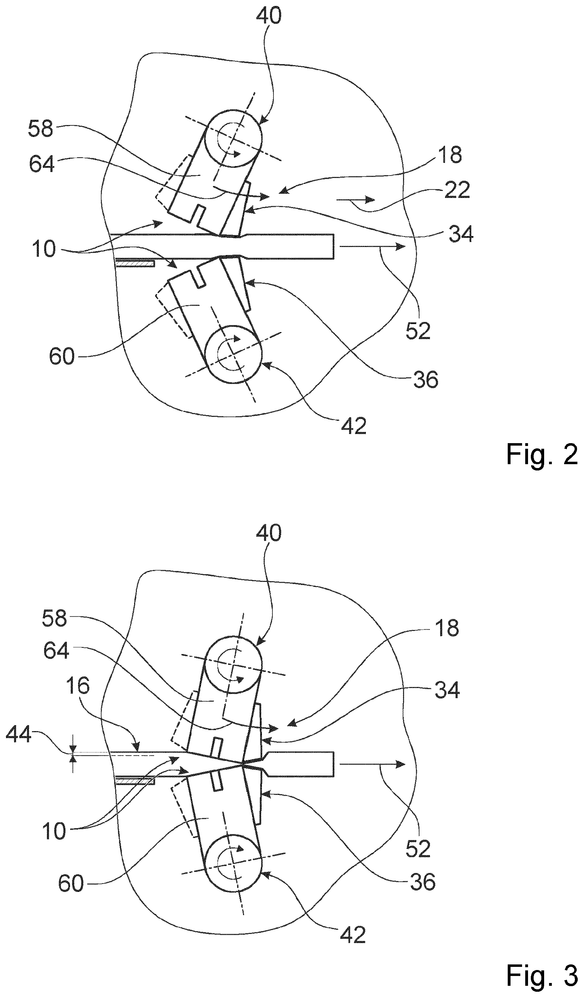

Das verarbeitete Verpackungsmaterial 16 weist eine Dicke 44 von 65 µm auf (vgl. Fig. 3). Das Verpackungsmaterial 16 ist ein Aluminiumverbundmaterial, das zumindest zu 20% aus Aluminium, zumindest zu 40% aus recyceltem Material und zumindest zu 40% aus nachwachsendem Rohstoff, insbesondere aus einem Papierwerkstoff besteht. Grundsätzlich sind jedoch verschiedene, dem Fachmann als sinnvoll erscheinende Zusammensetzungen denkbar.

## Patentansprüche

1. Verpackungsmaschinenvorrichtung mit wenigstens einer Verschlussvorrichtung (10), insbesondere einer Siegelvorrichtung, zur Herstellung wenigstens einer Verschlussnaht (12, 14), insbesondere einer Siegelnaht, an zumindest einem Verpackungsmaterial (16) und mit einer Formvorrichtung (18), die dazu vorgesehen ist, das zu einem Schlauchbeutel vorgeformte Verpackungsmaterial (16) in einem Bereich der Verschlussnaht (12, 14), insbesondere zumindest teilweise vor einem Herstellen der Verschlussnaht (12, 14), zu formen, **dadurch gekennzeichnet, dass** die Formvorrichtung (18) dazu vorgesehen ist, das Verpackungsmaterial (16) im Bereich der Verschlussnaht (12, 14) ausgehend von einem inneren Bereich (24) der Verschlussnaht (12, 14) in Richtung (30, 32) zwei äußerer Bereiche (26, 28) der Verschlussnaht (12, 14) zu formen.

2. Verpackungsmaschinenvorrichtung nach Anspruch 1, **dadurch gekennzeichnet, dass** die Formvorrichtung (18) dazu vorgesehen ist, das Verpackungsmaterial (16) in einer Projektionsebene (20) betrachtet, die parallel zur Verschlussnaht (12, 14) und parallel zu einer Längsrichtung (22) des Schlauchbeutels und/oder einer Bewegungsrichtung (52) des Schlauchbeutels verläuft, gezielt nacheinander in unterschiedlichen Bereichen (24, 26, 28) zu kontaktieren und hierdurch zu formen, insbesondere zu glätten.

3. Verpackungsmaschinenvorrichtung nach Anspruch 1 oder 2, **dadurch gekennzeichnet, dass** die Formvorrichtung (18) eine Formeinheit (34, 36) aufweist, die in einem Kontaktzeitpunkt mit dem Verpackungsmaterial (16) betrachtet eine sich in einem Verlauf in Richtung (38) der Verschlussnaht (12, 14) räumlich verändernde Geometrie aufweist.

4. Verpackungsmaschinenvorrichtung nach einem der vorhergehenden Ansprüche, **dadurch gekennzeichnet, dass** die Formvorrichtung (18) dazu vorgesehen ist, das Verpackungsmaterial (16) im Bereich der Verschlussnaht (12, 14) quer zur Verschlussnaht (12, 14) zu formen.

5. Verpackungsmaschinenvorrichtung nach Anspruch 4, **dadurch gekennzeichnet, dass** die Formvorrichtung (18) eine Formeinheit (34, 36) aufweist, die in einem Kontaktzeitpunkt mit dem Verpackungsmaterial (16) betrachtet eine sich in einem Verlauf quer zur Verschlussnaht (12, 14) räumlich verändernde Geometrie aufweist.

6. Verpackungsmaschinenvorrichtung nach einem der vorhergehenden Ansprüche, **dadurch gekennzeichnet, dass** die Formvorrichtung (18) eine Lagereinheit (40, 42) aufweist, mittels derer eine Formeinheit (34, 36) der Formvorrichtung (18) schwenkbar gelagert ist.

7. Verpackungsmaschinenvorrichtung nach einem der vorhergehenden Ansprüche, **dadurch gekennzeichnet, dass** die Formvorrichtung (18) eine Lagereinheit (40, 42) aufweist, die zumindest teilweise einstückig mit einer Lagereinheit der Verschlussvorrichtung (10) ausgebildet ist.

8. Verpackungsmaschinenvorrichtung nach einem der vorhergehenden Ansprüche, **dadurch gekennzeichnet, dass** die Formvorrichtung (18) eine Formeinheit (34, 36) aufweist, die verformbar, insbesondere elastisch verformbar ausgebildet ist.

9. Verpackungsmaschine mit einer Verpackungsmaschinenvorrichtung nach einem der Ansprüche 1 bis 8.

10. Verfahren mit einer Verpackungsmaschinenvorrichtung nach einem der Ansprüche 1 bis 8, wobei mit der Formvorrichtung (18) das zu einem Schlauchbeutel vorgeformte Verpackungsmaterial (16) in einem Bereich der Verschlussnaht (12, 14), insbesondere zumindest teilweise vor einem Herstellen der Verschlussnaht (12, 14), geformt wird, **dadurch gekennzeichnet, dass** mit der Formvorrichtung (18) das Verpackungsmaterial (16) im Bereich der Verschlussnaht (12, 14) ausgehend von einem inneren Bereich (24) der Verschlussnaht (12, 14) in Richtung (30, 32) zwei äußerer Bereiche (26, 28) der Verschlussnaht (12, 14) geformt wird.

11. Verfahren nach Anspruch10, **dadurch gekennzeichnet, dass** mit der Formvorrichtung (18) das Verpackungsmaterial (16), in einer Projektionsebene (20) betrachtet, die parallel zur Verschlussnaht (12, 14) und parallel zu einer Längsrichtung (22) des Schlauchbeutels und/oder einer Bewegungsrichtung (52) des Schlauchbeutels verläuft, gezielt nacheinander in unterschiedlichen Bereichen (24, 26, 28) kontaktiert und hierdurch geformt, insbesondere geglättet wird.

12. Verfahren nach Anspruch 10 oder 11, **dadurch gekennzeichnet, dass** mit der Formvorrichtung (18) das Verpackungsmaterial (16) im Bereich der Verschlussnaht (12, 14) quer zur Verschlussnaht (12, 14) formt.

13. Verfahren nach einem der Ansprüche10 bis 12, **dadurch gekennzeichnet, dass** eine Formeinheit (34, 36) der Formvorrichtung (18) beim Formen des Verpackungsmaterials (16) verformt wird.

14. Verfahren nach einem der Ansprüche10 bis 13, **dadurch gekennzeichnet, dass** ein Verpackungsmaterial (16) mit einer Dicke (44) größer als 30 µm und vorzugsweise größer als 40 µm verarbeitet wird.

15. Verfahren nach einem der Ansprüche10 bis 14, **dadurch gekennzeichnet, dass** ein Verpackungsmaterial (16) verarbeitet wird, das zumindest zu 20% und vorzugsweise zumindest zu 40% aus recyceltem Material hergestellt wurde.

16. Verfahren nach einem der Ansprüche10 bis 15, **dadurch gekennzeichnet, dass** ein Verpackungsmaterial (16) verarbeitet wird, das zumindest zu 20% und vorzugsweise zumindest zu 40% aus nachwachsendem Rohstoff hergestellt wurde.

17. Verfahren nach einem der Ansprüche 10 bis 16, **dadurch gekennzeichnet, dass** ein Verpackungsmaterial (16) verarbeitet wird, das zumindest zu 10% und vorzugsweise zumindest zu 20% aus Aluminium hergestellt wurde.

18. Herstellverfahren zur Herstellung einer Formeinheit (34, 36) einer Formvorrichtung (18) einer Verpackungsmaschinenvorrichtung nach einem der Ansprüche 1 bis 8, **gekennzeichnet durch** zumindest einen additiven Prozessschritt, vorzugsweise einen 3D-Druckprozessschritt.

## Claims

1. Packaging machine device comprising at least one closure device (10), in particular a sealing device, for producing at least one closure seam (12, 14), in particular a sealing seam, on at least one packaging material (16) and comprising a forming device (18) which is provided to form the packaging material (16), pre-formed into a tubular bag, in a region of the closure seam (12, 14), in particular at least partially before the closure seam (12, 14) is produced, **characterized in that** the forming device (18) is provided to form the packaging material (16) in the region of the closure seam (12, 14) starting from an inner region (24) of the closure seam (12, 14) in the direction (30, 32) of two outer regions (26, 28) of the closure seam (12, 14).

2. Packaging machine device according to claim 1, **characterized in that** the forming device (18) is provided to contact the packaging material (16), viewed in a projection plane (20) that runs parallel to the closure seam (12, 14) and parallel to a longitudinal direction (22) of the tubular bag and/or a movement direction (52) of the tubular bag, in a target-oriented manner consecutively in different regions (24, 26, 28) and thereby to form, in particular to smooth, the packaging material.

3. Packaging machine device according to claim 1 or 2,
**characterized in that** the forming device (18) has a forming unit (34, 36) which, viewed at a time of contact with the packaging material (16), has a geometry that changes spatially along a path in the direction (38) of the closure seam (12, 14).

4. Packaging machine device according to any of the preceding claims, **characterized in that** the forming device (18) is provided to form the packaging material (16) in the region of the closure seam (12, 14) transversely to the closure seam (12, 14).

5. Packaging machine device according to claim 4, **characterized in that** the forming device (18) has a forming unit (34, 36) which, viewed at a time of contact with the packaging material (16), has a geometry that changes spatially along a path transverse to the closure seam (12, 14).

6. Packaging machine device according to any of the preceding claims, **characterized in that** the forming device (18) has a bearing unit (40, 42) by means of which a forming unit (34, 36) of the forming device (18) is pivotably mounted.

7. Packaging machine device according to any of the preceding claims, **characterized in that** the forming device (18) has a bearing unit (40, 42) which is formed at least partially integrally with a bearing unit of the closure device (10).

8. Packaging machine device according to any of the preceding claims, **characterized in that** the forming device (18) has a forming unit (34, 36) which is deformable, in particular elastically deformable.

9. Packaging machine having a packaging machine device according to any of claims 1 to 8.

10. Method with a packaging machine device according to any of claims 1 to 8, the packaging material (16) pre-formed into a tubular bag being formed with the forming device (18) in a region of the closure seam (12, 14), in particular at least partially before the closure seam (12, 14) is produced, **characterized in that** the packaging material (16) is formed with the forming device (18) in the region of the closure seam (12, 14) starting from an inner region (24) of the closure seam (12, 14) in the direction (30, 32) of two outer regions (26, 28) of the closure seam (12, 14).

11. Method according to claim 10, **characterized in that** the packaging material (16), viewed in a projection plane (20) that runs parallel to the closure seam (12, 14) and parallel to a longitudinal direction (22) of the tubular bag and/or a movement direction (52) of the tubular bag, is contacted by the forming device (18) in a target-oriented manner consecutively in different regions (24, 26, 28) and thereby formed, in particular smoothed.

12. Method according to claim 10 or 11, **characterized in that** the packaging material (16) forms with the forming device (18) in the region of the closure seam (12, 14) transversely to the closure seam (12, 14).

13. Method according to any of claims 10 to 12, **characterized in that** a forming unit (34, 36) of the forming device (18) is deformed during the forming of the packaging material (16).

14. Method according to any of claims 10 to 13, **characterized in that** a packaging material (16) with a thickness (44) greater than 30 µm and preferably greater than 40 µm is processed.

15. Method according to any of claims 10 to 14, **characterized in that** a packaging material (16) is processed which is made from at least 20% and preferably at least 40% recycled material.

16. Method according to any of claims 10 to 15, **characterized in that** a packaging material (16) is processed which is made from at least 20% and preferably at least 40% renewable raw material.

17. Method according to any of claims 10 to 16, **characterized in that** a packaging material (16) is processed which is made from at least 10% and preferably at least 20% aluminum.

18. Production method for producing a forming unit (34, 36) of a forming device (18) of a packaging machine device according to any of claims 1 to 8, **characterized by** at least one additive process step, preferably a 3D printing process step.

## Revendications

1. Dispositif de machine d'emballage comportant au moins un dispositif de fermeture (10), en particulier un dispositif de scellage, pour la fabrication d'au moins un joint de fermeture (12, 14), en particulier d'un joint de scellage, sur au moins un matériau d'emballage (16) et comportant un dispositif de formage (18) qui est prévu pour mettre en forme le matériau d'emballage (16), préalablement mis en forme en un sachet tubulaire, dans une zone du joint de fermeture (12, 14), en particulier au moins partiellement avant la fabrication du joint de fermeture (12, 14),
**caractérisé en ce que** le dispositif de formage (18) est prévu pour mettre en forme le matériau d'emballage (16) dans la zone du joint de fermeture (12, 14) à partir d'une zone intérieure (24) du joint de fermeture (12, 14) en direction (30, 32) de deux zones extérieures (26, 28) du joint de fermeture (12, 14).

2. Dispositif de machine d'emballage selon la revendication 1,
**caractérisé en ce que** le dispositif de formage (18) est prévu pour entrer en contact avec le matériau d'emballage (16), vu dans un plan de projection (20) s'étendant parallèlement au joint de fermeture (12, 14) et parallèlement à une direction longitudinale (22) du sachet tubulaire et/ou à une direction de déplacement (52) du sachet tubulaire, de manière ciblée successivement dans différentes zones (24, 26, 28) et pour ainsi le mettre en forme, en particulier pour le lisser.

3. Dispositif de machine d'emballage selon la revendication 1 ou 2,
**caractérisé en ce que** le dispositif de formage (18) présente une unité de formage (34, 36) qui, vue au moment du contact avec le matériau d'emballage (16), présente une géométrie variant spatialement sur une étendue dans la direction (38) du joint de fermeture (12, 14).

4. Dispositif de machine d'emballage selon l'une des revendications précédentes, **caractérisé en ce que** le dispositif de formage (18) est prévu pour mettre en forme le matériau d'emballage (16) dans la zone du joint de fermeture (12, 14) transversalement au joint de fermeture (12, 14).

5. Dispositif de machine d'emballage selon la revendication 4,
**caractérisé en ce que** le dispositif de formage (18) présente une unité de formage (34, 36) qui, vue au moment du contact avec le matériau d'emballage (16), présente une géométrie variant spatialement sur une étendue transversale au joint de fermeture (12, 14).

6. Dispositif de machine d'emballage selon l'une des revendications précédentes, **caractérisé en ce que** le dispositif de formage (18) présente une unité de soutien (40, 42) au moyen de laquelle une unité de formage (34, 36) du dispositif de formage (18) est soutenue de manière à pouvoir pivoter.

7. Dispositif de machine d'emballage selon l'une des revendications précédentes, **caractérisé en ce que** le dispositif de formage (18) présente une unité de soutien (40, 42) qui est réalisée au moins en partie d'un seul tenant avec une unité de soutien du dispositif de fermeture (10).

8. Dispositif de machine d'emballage selon l'une des revendications précédentes, **caractérisé en ce que** le dispositif de formage (18) présente une unité de formage (34, 36) qui est réalisée de manière à être déformable, en particulier de manière à être déformable élastiquement.

9. Machine d'emballage comportant un dispositif de machine d'emballage selon l'une des revendications 1 à 8.

10. Procédé comportant un dispositif de machine d'emballage selon l'une des revendications 1 à 8, dans lequel le matériau d'emballage (16) préalablement mis en forme en un sachet tubulaire est mis en forme avec le dispositif de formage (18) dans une zone du joint de fermeture (12, 14), en particulier au moins partiellement avant la fabrication du joint de fermeture (12, 14), **caractérisé en ce que** le matériau d'emballage (16) est mis en forme avec le dispositif de formage (18) dans la zone du joint de fermeture (12, 14) à partir d'une zone intérieure (24) du joint de fermeture (12, 14) en direction (30, 32) de deux zones extérieures (26, 28) du joint de fermeture (12, 14).

11. Procédé selon la revendication 10, **caractérisé en ce que** le matériau d'emballage (16), vu dans un plan de projection (20) s'étendant parallèlement au joint de fermeture (12, 14) et parallèlement à une direction longitudinale (22) du sachet tubulaire et/ou à une direction de déplacement (52) du sachet tubulaire, entre en contact de manière ciblée successivement dans différentes zones (24, 26, 28) avec le dispositif de formage (18) et est ainsi mis en forme, en particulier est lissé.

12. Procédé selon la revendication 10 ou 11, **caractérisé en ce que** le matériau d'emballage (16) est mis en forme avec le dispositif de formage (18) dans la zone du joint de fermeture (12, 14) perpendiculairement au joint de fermeture (12, 14).

13. Procédé selon l'une des revendications 10 à 12, **caractérisé en ce qu'**une unité de formage (34, 36) du dispositif de formage (18) est déformée lors de la mise en forme du matériau d'emballage (16).

14. Procédé selon l'une des revendications 10 à 13, **caractérisé en ce qu'**un matériau d'emballage (16) comportant une épaisseur (44) supérieure à 30 µm et de préférence supérieure à 40 µm est transformé.

15. Procédé selon l'une des revendications 10 à 14, **caractérisé en ce qu'**un matériau d'emballage (16) fabriqué à partir d'au moins 20 % et de préférence d'au moins 40 % de matériaux recyclés est transformé.

16. Procédé selon l'une des revendications 10 à 15, **caractérisé en ce qu'**un matériau d'emballage (16) fabriqué à partir d'au moins 20 % et de préférence d'au moins 40 % de matières premières renouvelables est transformé.

17. Procédé selon l'une des revendications 10 à 16, **caractérisé en ce qu'**un matériau d'emballage (16) fabriqué à partir d'au moins 10 % et de préférence d'au moins 20 % d'aluminium est transformé.

18. Procédé de fabrication pour la fabrication d'une unité de formage (34, 36) d'un dispositif de formage (18) d'un dispositif de machine d'emballage selon l'une des revendications 1 à 8, **caractérisé par** au moins une étape de processus additif, de préférence une étape de processus d'impression 3D.
